(19) Europäisches Patentamt
European Patent Office
Office européen des brevets

(11) **EP 4 287 484 A1**

(12) **EUROPEAN PATENT APPLICATION**

(43) Date of publication:
**06.12.2023 Bulletin 2023/49**

(21) Application number: **22176955.7**

(22) Date of filing: **02.06.2022**

(51) International Patent Classification (IPC):
**H02M 3/335** (2006.01)

(52) Cooperative Patent Classification (CPC):
**H02M 3/33592; H02M 3/33523**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tridonic GmbH & Co KG**
**6851 Dornbirn (AT)**

(72) Inventors:
• **Stark, Stefan**
**6850 Dornbirn (AT)**

• **Nachbaur, Stefan**
**6850 Dornbirn (AT)**
• **Schertler, Markus**
**6850 Dornbirn (AT)**
• **Walch, Patrick**
**6850 Dornbirn (AT)**

(74) Representative: **Rupp, Christian**
**Mitscherlich PartmbB**
**Patent- und Rechtsanwälte**
**Karlstraße 7**
**80333 München (DE)**

(54) **SYNCHRONOUS ISOLATED LED CONVERTER, LED POWER SUPPLY AND LED LUMINAIRE**

(57) Disclosed is a synchronous isolated LED converter (1). The converter (1) comprises a main transformer (111, 112, 113), a voltage sensing circuit (14), a controller (16), an ancillary transformer (191, 192), and a switch (20). The main transformer (111, 112, 113) is configured to transform electric power from an input-side electric potential (12) of the converter (1) to an output-side electric potential (13) of the converter (1), and includes an auxiliary winding (113). The voltage sensing circuit (14) is connected to the auxiliary winding (113) and configured to generate a voltage sensing signal (15, $V_{SNS2}$) in accordance with a voltage across the auxiliary winding (113). The controller (16) is connected to the voltage sensing circuit (14) and configured to provide a drive current (17, $I_{SW2}$) in accordance with a sampling of the voltage sensing signal (15, $V_{SNS2}$). The sampled voltage sensing signal (15, $V_{SNS2}$) is indicative of an output voltage (18, $V_{LED}$) of the converter (1), and the drive current (17, $I_{SW2}$) is associated with the input-side electric potential (12). The ancillary transformer (191, 192) is connected to the controller (16) and configured to transform the drive current (17, $I_{SW2}$) from the input-side electric potential (12) to the output-side electric potential (13). The switch (20) is operable in accordance with the transformed drive current (17, $I_{SW2}$). The controller (16) is further configured to sample the voltage sensing signal (15, $V_{SNS2}$) in accordance with a zero-crossing of an output-side current ($I_2$) of the converter (1), yet asynchronously with respect to pulse edges of the drive current (17, $I_{SW2}$). This avoids an incorrect voltage sensing in a cost-efficient manner.

Fig. 2

## Description

## Technical Field

The present disclosure relates to lighting technology, and in particular to a synchronous isolated LED converter, an LED power supply and an LED luminaire.

## Background Art

Synchronous LED converter topologies generally include an output-side switch which may need to be driven from an input-side of the converter across a Safety Extra Low Voltage (SELV) barrier. In case of a current drive, the control signal of the output-side switch is generated in accordance with a pulsed drive current via an ancillary transformer.

A closed-loop control of the converter's output voltage Vo requires a voltage sensing signal that is indicative of said output voltage. The voltage sensing signal may, for instance, be acquired by means of an auxiliary winding of the main transformer when an output-side current becomes zero. Since current drive and voltage sensing take place concurrently, the pulsed drive current may disturb the voltage sensing signal $V_{SNS2}$. More specifically, the pulses of the drive current may imprint themselves on the voltage sensing signal $V_{SNS2}$. As such, a sample-and-hold measurement of the voltage sensing signal $V_{SNS2}$ may provide the closed-loop control with an incorrect feedback of the controlled variable.

Avoiding or reducing the disturbances by means of hardware design optimizations may not be possible or may not result in satisfactory improvements.

## Summary

In view of these observations, it is an objective to improve a voltage sensing of Synchronous LED converter topologies and, in particular, to avoid that the disturbances on the voltage sensing signal $V_{SNS2}$ affect the converter's closed-loop control.

The objective is achieved by the embodiments as defined by the appended independent claims. Preferred embodiments are set forth in the dependent claims and in the following description and drawings.

A first aspect of the present disclosure relates to a synchronous isolated LED converter. The converter comprises a main transformer, a voltage sensing circuit, a controller, an ancillary transformer, an input-side switch and an output-side switch. The main transformer is configured to transform electric power from an input-side electric potential of the converter to an output-side electric potential of the converter in accordance with an operation of the input-side switch. The main transformer includes an auxiliary winding. The voltage sensing circuit is connected to the auxiliary winding and configured to generate a voltage sensing signal in accordance with a voltage across the auxiliary winding. The controller is connected to the voltage sensing circuit and configured to provide a drive current in accordance with a sampling of the voltage sensing signal. The drive current is associated with the input-side electric potential, and the sampled voltage sensing signal is indicative of an output voltage of the converter. The ancillary transformer is connected to the controller and configured to transform the drive current from the input-side electric potential to the output-side electric potential. The output-side switch is operable in accordance with the transformed drive current. The controller is further configured to sample the voltage sensing signal in accordance with a zero-crossing of an output-side current of the converter, yet asynchronously with respect to pulse edges of the drive current.

The controller may further be configured to estimate a time of the zero-crossing of the output-side current of the converter by an approach of similar triangles in accordance with respective waveforms of the output-side current of the converter and an input-side current of the converter, respectively.

According to the approach of similar triangles the time of the zero-crossing of the output-side current of the converter relative to a time duration of a decay of the output-side current of the converter may correspond to a time of a zero-crossing of the input-side current of the converter relative to a time duration of a rise of the input-side current of the converter.

The controller may further be configured to determine the time of the zero-crossing of the input-side current of the converter relative to the time duration of the rise of the input-side current of the converter.

The controller may further be configured to offset a sampling period of the voltage sensing signal relative to the time of the zero-crossing of the output-side current of the converter by a delay term.

The sampling period of the voltage sensing signal may comprise an acquisition time interval of a sample-and-hold circuit. The acquisition time interval may be shorter than a time interval between consecutive pulse edges of the drive current.

The delay term may depend on the time interval between consecutive pulse edges of the drive current and the sampling period of the voltage sensing signal.

The delay term may correspond to half of a difference between the time interval between consecutive pulse edges of the drive current and the sampling period of the voltage sensing signal.

The sampled voltage sensing signal may correspond to the output voltage of the converter multiplied by a ratio of windings of an input-side winding of the main transformer and the auxiliary winding of the main transformer.

The output-side switch may comprise a field-effect transistor.

The output-side switch may be conductive when the drive current corresponds to a pulse train of positive current pulses, and may be non-conductive when the drive current corresponds to a pulse train of negative current pulses.

The voltage sensing circuit may comprise a resistive voltage divider circuit and a resistive-capacitive, RC, low-pass circuit.

The converter may comprise a synchronous Flyback converter.

A second aspect of the present disclosure relates to an LED power supply, comprising a synchronous isolated LED converter according to the first aspect or any of its implementations.

A third aspect of the present disclosure relates to an LED luminaire, comprising an LED power supply according to the second aspect; and an LED load connected to the LED power supply.

**Advantageous Effects**

In accordance with the present disclosure an incorrect voltage sensing may be avoided and a specified LED voltage measurement accuracy may be achieved in a cost-efficient manner.

These technical effects and advantages equally apply to the synchronous isolated LED converter according to the first aspect, to the LED power supply according to the second aspect comprising the LED converter, and to the LED luminaire according to the third aspect comprising the LED power supply.

**Brief Description of Drawings**

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1          illustrates an exemplary LED power supply in accordance with the present disclosure;

FIG. 2          illustrates a synchronous isolated LED converter in accordance with the present disclosure; and

FIGs. 3 and 4          illustrate various electrical signals associated with the LED converter of FIG. 2.

**Detailed Descriptions of Drawings**

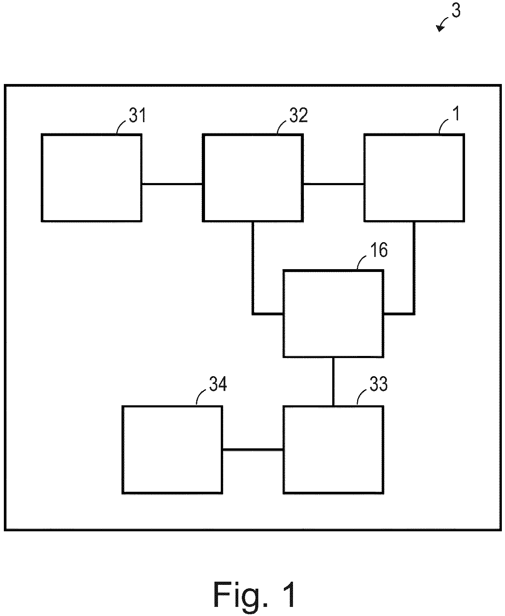

FIG. 1 illustrates an exemplary LED power supply 3 in accordance with the present disclosure.

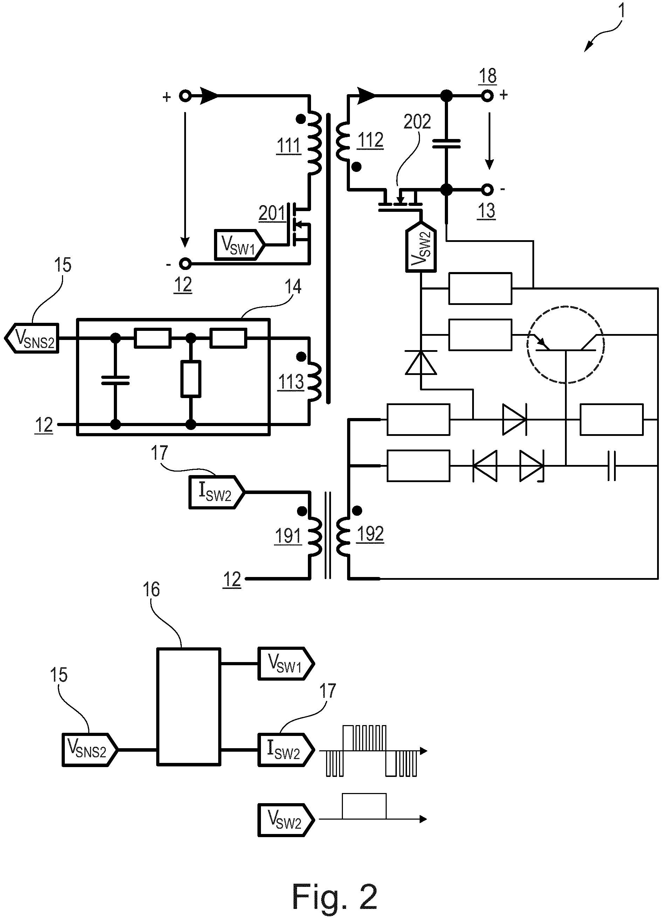

The power supply 3 comprises a synchronous isolated LED converter 1 which will be explained in more detail in connection with FIG. 2 below, and may further comprise an electromagnetic interference (EMI) filter circuit 31 and a power factor correction (PFC) circuit 32 upstream of the converter 1.

A control circuitry of the power supply 3 may comprise a controller 16 in the form of an integrated circuit, e.g. application-specific integrated circuit (ASIC) 16, for control of the PFC circuit 32 and the converter 1, and a microcontroller ($\mu$C) 33 for control and configuration of the ASIC 16 and of one or more interface circuits 34.

FIG. 2 illustrates a synchronous isolated LED converter 1 in accordance with the present disclosure.

The converter 1 may particularly comprise a synchronous Flyback converter.

The converter 1 comprises a main transformer 111, 112, 113, a voltage sensing circuit 14, a controller 16, an ancillary transformer 191, 192, an input-side switch 201 and an output-side switch 202.

The converter 1 may further comprise a current sense transformer (not shown). The current sense transformer may be applied to sense an output / LED current and to transfer the information about the sensed output current to the input side of the isolated converter 1. An example for a current sense transformer of an isolated LED converter is shown in WO 2018/087302 A1.

The converter 1 may be supplied with electric power in the form of a direct-current (DC) bus voltage referencing an input-side electric potential 12 of the converter 1.

The main transformer 111, 112, 113 is configured to transform electric power from the input-side electric potential 12 of the converter 1 to an output-side electric potential 13 of the converter 1 in accordance with an operation of the input-side switch 201.

In other words, the main transformer 111, 112, 113 is designed to inductively connect the input (primary) side of the converter 1 and the output (secondary) side of the converter 1 via its input-side (primary) winding 111 and its output-side (secondary) winding 112.

The main transformer 111, 112, 113 further includes an auxiliary winding 113. The voltage sensing circuit 14 may comprise a resistive voltage divider circuit and a resistive-capacitive, RC, low-pass circuit, is connected to the auxiliary winding 113, and is configured to generate a voltage sensing signal 15, $V_{SNS2}$ in accordance with a voltage across the auxiliary winding 113.

The controller 16 is connected to the voltage sensing circuit 14 and configured to provide a drive current 17, $I_{SW2}$ in accordance with a sampling of the voltage sensing signal 15, $V_{SNS2}$. The sampled voltage sensing signal 15, $V_{SNS2}$ is indicative of an output voltage 18, $V_{LED}$ of the converter 1 and may therefore serve as a feedback signal of a closed-loop control of the output voltage 18, $V_{LED}$.

The drive current 17, $I_{SW2}$ is associated with the input-side electric potential 12 of the converter 1. The ancillary transformer 191, 192 is connected to the controller 16 and configured to transform the drive current 17, $I_{SW2}$ from the input-side electric potential 12 to the output-side electric potential 13.

The output-side switch 202, which may particularly comprise a field-effect transistor (FET), is operable in accordance with the transformed drive current 17, $I_{SW2}$. To this end, the converter 1 may further comprise a circuitry for conditioning of the transformed drive current 17, $I_{SW2}$ into a control signal $V_{SW2}$ of the output-side switch 202. The conditioning circuitry is shaded in FIG. 2 to indicate that it does not represent a key aspect of the present disclosure. As indicated in FIG. 2, the (transformed) drive current 17, $I_{SW2}$ includes alternating trains of positive current pulses and negative current pulses. The conditioning circuitry is configured to convert each train of positive current pulses into a positive voltage pulse of the control signal $V_{SW2}$, wherein a time duration of the positive voltage pulse corresponds to a time duration of the underlying train of positive current pulses. The conditioning circuitry is further configured to convert each train of negative current pulses into a zero line voltage of the control signal $V_{SW2}$, wherein a time duration of the zero line voltage corresponds to a time duration of the underlying train of negative current pulses.

In summary, the output-side switch 202 may be conductive when the drive current 17, $I_{SW2}$ corresponds to a pulse train of positive current pulses, and may be non-conductive when the drive current 17, $I_{SW2}$ corresponds to a pulse train of negative current pulses.

The controller 16 is further configured to sample the voltage sensing signal 15, $V_{SNS2}$ in accordance with a zero-crossing of an output-side current $I_2$ of the converter 1. Yet the sampling of the voltage sensing signal 15, $V_{SNS2}$ is performed asynchronously with respect to pulse edges of the drive current 17, $I_{SW2}$., in order to avoid an incorrect voltage sensing, as will be explained next.

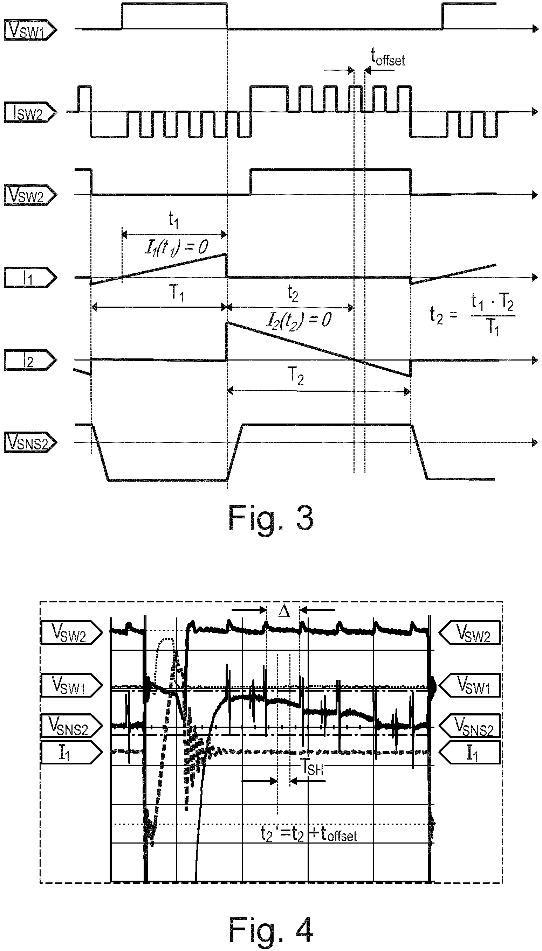

FIGs. 3 and 4 illustrate various electrical signals associated with the LED converter 1 of FIG. 2.

The first / topmost curve of FIG. 3 represents to the control signal $V_{SW1}$ of the input-side switch 201. The input-side switch 201 may be conductive when the control signal $V_{SW1}$ corresponds to a positive voltage pulse, and may be non-conductive when the control signal $V_{SW1}$ corresponds to a zero line voltage.

The second and third curves of FIG. 3 represent the drive current 17, $I_{SW2}$ for the output-side switch 202, and the control signal $V_{SW2}$ of the output-side switch 202, respectively. As explained in connection with FIG. 2 above, each train of positive current pulses is converted into a positive voltage pulse of the control signal $V_{SW2}$, and each train of negative current pulses is converted into a zero line voltage of the control signal $V_{SW2}$, so that the output-side switch 202 may be conductive when the drive current 17, $I_{SW2}$ corresponds to a pulse train of positive current pulses, and may be non-conductive when the drive current 17, $I_{SW2}$ corresponds to a pulse train of negative current pulses.

The fourth curve of FIG. 3 represents an input-side current Ii, which starts rising from a negative peak value every time the output-side switch 202 becomes non-conductive, and stops rising at a positive peak value every time the input-side switch 201 becomes non-conductive.

The fifth curve of FIG. 3 represents an output-side current $I_2$, which starts decaying from a positive peak value every time the input-side switch 201 becomes non-conductive, and stops decaying at a negative peak value every time the output-side switch 202 becomes non-conductive.

The sixth curve of FIG. 3 represents the voltage sensing signal 15, $V_{SNS2}$ which may be generated by the voltage sensing circuit 14 in accordance with a voltage across the auxiliary winding 113. The voltage sensing signal 15, $V_{SNS2}$ rapidly drops down to negative value every time the output-side switch 202 becomes non-conductive, and rapidly shoots up to positive value every time the input-side switch 201 becomes non-conductive.

For its closed-loop control, the controller 16 is designed to sample the voltage sensing signal 15, $V_{SNS2}$ when having a positive value in accordance with the zero-crossing of the output-side current $I_2$ of the converter 1. As can be seen in FIG. 3, the voltage sensing signal 15, $V_{SNS2}$ has a positive value when the output-side switch 202 is conductive, i.e., when the control signal $V_{SW2}$ of the output-side switch 202 is non-zero and the drive current 17, $I_{SW2}$ for the output-side switch 202 corresponds to a train of positive current pulses. However, the pulsing of the drive current 17, $I_{SW2}$ may lead to noise on the voltage sensing signal 15, $V_{SNS2}$.

For example, it may be taken from the measured electrical signals illustrated in FIG. 4 that the pulsing of the drive current 17, $I_{SW2}$ leads to noise on the control signal $V_{SW2}$ of the output-side switch 202 as well as to noise on the voltage sensing signal 15, $V_{SNS2}$.

In order to avoid an incorrect voltage sensing, the sampling of the voltage sensing signal 15, $V_{SNS2}$ should therefore be performed asynchronously with respect to pulse edges of the drive current 17, $I_{SW2}$.

To this end, the controller 16 may be configured to estimate a time $t_2$ of the zero-crossing of the output-side current $I_2$ of the converter 1 by an approach of similar triangles in accordance with respective waveforms of the output-side current $I_2$ of the converter 1 and the input-side current $I_1$ of the converter 1, respectively.

According to the approach of similar triangles (i.e., using the well-known "rule of three"), a time $t_2$ of the zero-crossing of the output-side current $I_2$ of the converter 1 relative to a time duration $T_2$ of a decay of the output-side current $I_2$ of the converter 1 may correspond to a time $t_1$ of a zero-crossing of the input-side current $I_1$ of

the converter 1 relative to a time duration $T_1$ of a rise of the input-side current $I_1$ of the converter 1:

$$\frac{t_2}{T_2} = \frac{t_1}{T_1}$$

The controller 16 may thus be configured to determine the time $t_1$ of the zero-crossing of the input-side current $I_1$ of the converter 1 relative to the time duration $T_1$ of the rise of the input-side current $I_1$ of the converter 1.

Solving for the time $t_2$ of the zero-crossing of the output-side current $I_2$ yields:

$$t_2 = \frac{t_1 \cdot T_2}{T_1}$$

As indicated in FIG. 3, the time $t_2$ of the zero-crossing of the output-side current $I_2$ may coincide with a pulse of the pulsed drive current 17, $I_{SW2}$ (second curve of FIG. 3).

The controller 16 may therefore be configured to offset a sampling period $T_{SH}$ of the voltage sensing signal 15, $V_{SNS2}$ relative to the time $t_2$ of the zero-crossing of the output-side current $I_2$ of the converter 1 by a delay term $t_{offset}$:

$$t_2' = \frac{t_1 \cdot T_2}{T_1} \pm t_{offset}$$

In particular, the sampling period $T_{SH}$ of the voltage sensing signal 15, $V_{SNS2}$ may comprise an acquisition time interval of a sample-and-hold circuit.

As indicated in FIG. 4, the acquisition time interval (and thus the sampling period $T_{SH}$) may be shorter than a time interval $\Delta$ between consecutive pulse edges of the drive current 17, $I_{SW2}$.

The delay term $t_{offset}$ may depend on the time interval $\Delta$ between consecutive pulse edges of the drive current 17, $I_{SW2}$ and on the sampling period $T_{SH}$ of the voltage sensing signal 15, $V_{SNS2}$.

In particular, the delay term $t_{offset}$ may correspond to half of a difference between the time interval $\Delta$ between consecutive pulse edges of the drive current 17, $I_{SW2}$ and the sampling period $T_{SH}$ of the voltage sensing signal 15, $V_{SNS2}$:

$$t_{offset} = \frac{\Delta - T_{SH}}{2}$$

The sampling period $T_{SH}$ may also be divided if the pulses are too close to one another.

The sampled voltage sensing signal 15, $V_{SNS2}$ may correspond to the output voltage 18, $V_{LED}$ of the converter 1 multiplied by a ratio of windings $w_1/w_3$ of an input-side winding $w_1$ of the main transformer 111, 112, 113 and the auxiliary winding $w_3$, 113 of the main transformer 111, 112, 113:

$$V_{SNS2} = V_{LED} \cdot \frac{w_1}{w_3}$$

## Claims

1. A synchronous isolated LED converter (1), comprising

   an input-side switch (201);
   a main transformer (111, 112, 113), being configured to transform electric power from an input-side electric potential (12) of the converter (1) to an output-side electric potential (13) of the converter (1) in accordance with an operation of the input-side switch (201), the main transformer (111, 112, 113) including an auxiliary winding (113);
   a voltage sensing circuit (14), being connected to the auxiliary winding (113) and being configured to generate a voltage sensing signal (15, $V_{SNS}$) in accordance with a voltage across the auxiliary winding (113);
   a controller (16), being connected to the voltage sensing circuit (14) and being configured to provide a drive current (17, $I_{SW2}$) in accordance with a sampling of the voltage sensing signal (15, $V_{SNS}$), the sampled voltage sensing signal (15, $V_{SNS}$) being indicative of an output voltage (18) of the converter (1), and the drive current (17, $I_{SW2}$) being associated with the input-side electric potential (12);
   an ancillary transformer (191, 192), being connected to the controller (16) and being configured to transform the drive current (17, $I_{SW2}$) from the input-side electric potential (12) to the output-side electric potential (13); and
   an output-side switch (202), being operable in accordance with the transformed drive current (17, $I_{SW2}$);
   the controller (16) further being configured to sample the voltage sensing signal (15, $V_{SNS}$) in accordance with a zero-crossing, ZX, of an output-side current ($I_2$) of the converter (1), yet asynchronously with respect to pulse edges of the drive current (17, $I_{SW2}$).

2. The converter (1) of claim 1,
   the controller (16) further being configured to estimate a time $(t_s)$ of the zero-crossing of the output-side current ($I_2$) of the converter (1) by an approach of similar triangles in accordance with respective waveforms of the output-side current ($I_2$) of the con-

verter (1) and an input-side current ($I_1$) of the converter (1), respectively.

3. The converter (1) of claim 2,
   wherein according to the approach of similar triangles the time ($t_s$) of the zero-crossing of the output-side current ($I_2$) of the converter (1) relative to a time duration ($T_s$) of a decay of the output-side current ($I_2$) of the converter (1) corresponds to a time ($t_p$) of a zero-crossing of the input-side current ($I_1$) of the converter (1) relative to a time duration ($T_p$) of a rise of the input-side current ($I_1$) of the converter (1).

4. The converter (1) of claim 3,
   the controller (16) further being configured to determine the time ($t_p$) of the zero-crossing of the input-side current ($I_1$) of the converter (1) relative to the time duration ($T_p$) of the rise of the input-side current ($I_1$) of the converter (1).

5. The converter (1) of any one of the claims 2 to 4,
   the controller (16) further being configured to offset a sampling period ($T_{SH}$) of the voltage sensing signal (15, $V_{SNS}$) relative to the time ($t_s$) of the zero-crossing of the output-side current ($I_2$) of the converter (1) by a delay term ($t_{offset}$).

6. The converter (1) of claim 5,
   the sampling period ($T_{SH}$) of the voltage sensing signal (15, $V_{SNS}$) comprising an acquisition time interval of a sample-and-hold circuit, the acquisition time interval being shorter than a time interval ($\Delta$) between consecutive pulse edges of the drive current (17, $I_{SW2}$).

7. The converter (1) of claim 5 or claim 6,
   the delay term ($t_{offset}$) depending on the time interval ($\Delta$) between consecutive pulse edges of the drive current (17, $I_{SW2}$) and on the sampling period ($T_{SH}$) of the voltage sensing signal (15, $V_{SNS}$).

8. The converter (1) of claim 7,
   the delay term ($t_{offset}$) corresponding to half of a difference between the time interval ($\Delta$) between consecutive pulse edges of the drive current (17, $I_{SW2}$) and the sampling period ($T_{SH}$) of the voltage sensing signal (15, $V_{SNS}$).

9. The converter (1) of any one of the preceding claims,
   the sampled voltage sensing signal (15, $V_{SNS}$) corresponding to the output voltage (18) of the converter (1) multiplied by a ratio of windings ($w_1/w_3$) of an input-side winding ($w_1$) of the main transformer (111, 112, 113) and the auxiliary winding (113) ($w_3$) of the main transformer (111, 112, 113).

10. The converter (1) of any one of the preceding claims,
    the output-side switch (202) comprising a field-effect transistor FET.

11. The converter (1) of any one of the preceding claims,
    the output-side switch (202) being conductive when the drive current (17, $I_{SW2}$) corresponds to a pulse train of positive current pulses, and being non-conductive when the drive current (17, $I_{SW2}$) corresponds to a pulse train of negative current pulses.

12. The converter (1) of any one of the preceding claims,
    the voltage sensing circuit (14) comprising a resistive voltage divider circuit and a resistive-capacitive, RC, low-pass circuit.

13. The converter (1) of any one of the preceding claims,
    the converter (1) comprising a synchronous Flyback converter (1).

14. An LED power supply (3), comprising

    - a synchronous isolated LED converter (1) according to any one of the preceding claims.

15. An LED luminaire, comprising

    - an LED power supply (3) according to claim 14; and
    - an LED load connected to the LED power supply (3).

Fig. 1

Fig. 2

Fig. 3

Fig. 4

Europäisches
Patentamt

European
Patent Office

Office européen
des brevets

# EUROPEAN SEARCH REPORT

Application Number

EP 22 17 6955

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/328689 A1 (XU SHEN [CN] ET AL) 15 October 2020 (2020-10-15) * figure 1 * * paragraph [0030] – paragraph [0031] * ----- | 1-15 | INV. H02M3/335 |
| A | US 2016/329819 A1 (CHEN YU-CHANG [TW] ET AL) 10 November 2016 (2016-11-10) * figure 4 * * paragraph [0066] – paragraph [0068] * * paragraph [0073] * ----- | 1-15 | |
| A | US 2020/412265 A1 (MURUGESAN SARAVANAN [IN] ET AL) 31 December 2020 (2020-12-31) * figure 2D * * paragraph [0050] * ----- | 1-15 | |

TECHNICAL FIELDS
SEARCHED      (IPC)

H02M

The present search report has been drawn up for all claims

| Place of search | Date of completion of the search | Examiner |
|---|---|---|
| The Hague | 24 October 2022 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 6955

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2022

| Patent document cited in search report | | Publication date | Patent family member(s) | | Publication date |
|---|---|---|---|---|---|
| US 2020328689 | A1 | 15-10-2020 | CN | 109995254 A | 09-07-2019 |
| | | | US | 2020328689 A1 | 15-10-2020 |
| | | | WO | 2019129270 A1 | 04-07-2019 |
| US 2016329819 | A1 | 10-11-2016 | CN | 106130349 A | 16-11-2016 |
| | | | TW | 201640800 A | 16-11-2016 |
| | | | US | 2016329819 A1 | 10-11-2016 |
| US 2020412265 | A1 | 31-12-2020 | US | 10651754 B1 | 12-05-2020 |
| | | | US | 2020412265 A1 | 31-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2018087302 A1